# EUROPEAN PATENT SPECIFICATION

(11) **EP 3 524 948 B1**
(45) Date of publication and mention of the grant of the patent: **31.01.2024**
(21) Application number: 19155241.3
(22) Date of filing: 04.02.2019
(51) Int. Cl.: G01K 1/02, G01K 1/024, G01M 5/00, H04Q 9/00

(54) **SYSTEM FOR THE AUTOMATIC WIRELESS MONITORING, REMOTELY AND IN REAL TIME, OF STRUCTURES, INFRASTRUCTURES AND MOUNTAIN-SLOPE SECTORS**
SYSTEM ZUR AUTOMATISCHEN DRAHTLOSEN ÜBERWACHUNG, FERNGESTEUERT UND IN ECHTZEIT, VON STRUKTUREN, INFRASTRUKTUREN UND BERGHANGSEKTOREN
SYSTÈME DE SURVEILLANCE AUTOMATIQUE ET SANS FIL, À DISTANCE ET EN TEMPS RÉEL, DES STRUCTURES, INFRASTRUCTURES ET DES SECTEURS DE PENTE DE MONTAGNE

(30) Priority: 07.02.2018 IT 201800002465
(43) Date of publication of application: 14.08.2019
(73) Proprietor: C.S.G. S.R.L., 15010 Ricaldone (AL) (IT)
(72) Inventor: FOGLINO, LUIGI, 15010 Ricaldone (AL) (IT); FOGLINO, Sara, 15010 Ricaldone (AL) (IT); FOGLINO, Valentina, 15010 Ricaldone (AL) (IT); LOVISOLO, Mario, 15010 Ricaldone (AL) (IT)
(74) Representative: Karaghiosoff, Giorgio Alessandro

(56) References cited:
- WO-A1-2017/191564
- JP-A- H11 118 937
- US-A1- 2010 238 027
- US-A1- 2013 107 750
- US-B1- 6 292 108

## Description

The present invention concerns a system for the automatic wireless monitoring, remotely and in real time, of structures, infrastructures and slope sectors with high hydrogeological risk (susceptible to collapses, landslides, avalanches) aimed at safeguarding public and private safety.

The aforesaid system comprises
at least one detecting unit with at least one measuring sensor to measure a physical, geological, chemical, environmental parameter, the unit being positioned or positionable at a predetermined detection point, preferably a plurality of detecting units positioned or positionable respectively in one of a plurality of detection points arranged over an area, each unit comprising at least one measuring sensor to measure a physical, geological, chemical, environmental parameter;
at least one control station to collect detection signals and at least partially process said signals or transmit said signals to a remote processing server;
said detecting units and said control unit being provided with a receiving and/or transmitting communication section through which said detecting units and the control station communicate with each other and possibly with additional remote client or server units.

The invention is inspired by an existing device intended to monitor the geotechnical, geological-structural, hydrogeological, geophysical parameters of lands and rocks and more generally the geotechnical, mining and structural engineering introduced with Patent n. 0001323688 dated 09/22/2004 already object of subsequent improvements (Patent n. 001346108 dated 07/03/2008, Patent n. 0001405009 dated 12/16/2013, Patent n. 0001405010 dated 12/16/2013).

These patents gave rise to the production of specific 2D and 3D monitoring columns to be inserted in a drilling hole and of concatenations of modules to be fixed on surfaces, known by the acronym DMS^{®} (Differential Monitoring of Stability) used to control landslides and to monitor geotechnical parameters along with geotechnical engineering works. These devices are managed by a local control unit programmed to periodically interrogate the concatenation of modules containing the sensors with an RS485 communication protocol. The control unit simultaneously provides the interrogation and verification of the parameter values detected, the transmission of data and the automatic generation of alert communications by GSM, GPRS or satellite modem to the personnel available or to the control room. This simple and very efficient monitoring logic is particularly suited for the management of concatenations, also very long, of instrumented modules and is therefore intended for the in-depth monitoring of landslides or slopes susceptible to landslides, also with very deep slipping surfaces, and more generally for the tri-directional monitoring both in depth and on the surface by means of concatenations of modules and joints connected by cable to a single control unit.

When monitoring of the areal type is required, and in particular when the verification points, i.e. detection points, are not connectable to each other by cable, the monitoring instruments currently on the market provide for the programmed interrogation of the sensors by the control units in wireless mode.

The wireless devices are commonly powered by internal batteries and, whenever possible, by autonomous battery charging devices (photovoltaic panels, etc.); the programmed interrogations are often limited to a few readings per day so that to limit energy consumption and make the system unsuitable for alert applications, in particular in the presence of fast kinematic systems.

In fact, there are high risk situations in which the kinematics of instability can progress very rapidly, for example in case of breakages of rigid structural elements, in support works, in landslides from collapses, in avalanches, etc. In these conditions, the programmed interrogation of the sensors would not provide the necessary safety conditions since this could occur in a belated way with respect to the occurrence of the event. Moreover, the traditional GSM - GPRS transmission could also be belated and would not allow the activation of the safety devices.

The document US 6,292,108 describes a structural monitoring system that provides, in near real time, structural assessments, also for extreme events (earthquakes).

The document is based on the wireless communication generated through commercial devices between the sensor units and the master unit, but there are clear differences in the management and use of the data coming from the instruments and in the monitoring purposes with respect to the present invention.

The document US2010/238027 concerns a system for the automatic wireless monitoring, remotely and in real time, of structures, infrastructures and slop sectors with high hydrogeological risk (susceptible to collapses, landslides, avalanches) aimed at safeguarding public and private safety.

In US 6,292,108, the wireless communication is substantially provided to avoid making cable systems, attributing such reason to the fact that long cables lead to the degradation of the sensor signal, costs, etc. The monitoring is used to verify the structural conditions by means of accelerometer sensors in "near real time," for assessments also following extreme events (earthquakes).

That which is specified in US 6,292,108 (column 19 line 39-63), concerning an example related to the structural monitoring of an 8-story building where the time of the entire data process is analyzed and defined in 20 minutes, unequivocally demonstrates the different approach on the topic. No alert monitoring system (where the object is to safeguard public and private safety) can be considered as such in the event of fast extreme events, such as landslides, avalanches, etc., if the data deriving from it requires such long times (US 6,292,108 column 8 table 1, near real time performance within 30 minutes). It is perfectly useless to recur to wireless systems and "smart sensors" if the process requires acquisition and processing times of dozens of minutes.

In the case of fast paroxysmal events (fast landslides, avalanches, floods, structural failures, for example following earthquakes, etc.), the programmed interrogation, even at each minute, could be belated, the sending of SMS may not be immediate, the technicians in charge of verifying the system would not anyhow have the physical time to consult the data and to implement the measures (sound signals, light signals, etc.).

In these cases, it is necessary to implement automatic monitoring systems, remotely and in real time, according to the methods set forth in US2010/238027, as claimed by the aforesaid document with the aim of safeguarding public and private safety.

The first prototypes currently made and named DMS Smart allow quick alerting with electric drives with a latency of 1-10 seconds (depending on the subdivision of the modules in the various alarm channels) over distances of some kilometers.

The present invention aims to implement a system of the aforesaid type which overcomes the drawbacks of known monitoring systems and which allows the application of monitoring systems also in the most extreme conditions and events in terms of the geophysical and environmental effects to be monitored, as well as in terms of the intervention zones, by also extending the benefits of monitoring systems to fields in which their application is currently neither possible nor advantageous.

According to a first embodiment, the present invention concerns a system for the analysis and automatic monitoring, remotely and in real time, of structures, infrastructures and slope sectors with high hydrogeological risk and susceptible to collapses, landslides, avalanches with the aim of safeguarding public and private safety, as defined in claim 1.

It should be noted that the threshold values of reference are preset and/or presettable and that a trigger circuit coupled with the vibration sensor or with an accelerometer is not provided.

Thanks to the present invention, through the application of modern Wireless long range radio frequency devices (i.e. LoRa^{®}), it is possible to implement a new communication logic that inverts the role of the control unit by placing the peripheral module at the center of the monitoring, i.e. the detecting unit containing at least one sensor, possibly more sensors intended to measure the different variables, and the long range radio frequency transmitter or other wireless device. Therefore, the control unit is no longer the one requesting data to the modules of the detecting units containing the sensor or sensors, as the detecting unit itself will actively send the transmission and communicate to the control unit the data for which the preset site-specific threshold parameters were exceeded and/or the indication of the simple occurrence of the exceeding of the threshold parameters and/or the variation with respect to the initial or stand-by configuration.

According to a further characteristic, in combination with said detecting units, a data and/or control entry unit is provided which can be constituted by the control unit itself and/or possibly also a portable control unit, both the stationary and/or portable control units are provided with human-machine interfaces so as to be able to input data and/or controls and to remotely modify said threshold values or parameters.

According to an embodiment, the detecting units comprise two or more sensors that can be constituted by all or part of the sensors selected among the following sensors: acceleration sensors, inclination sensors, pressure sensors, temperature sensors, position sensors, movement sensors.

It is possible to use sensors of any other type selected among one or more known sensors adapted to determine the physical, chemical and/or geophysical conditions present in sites where the detecting units are positioned, as well as sensors of future construction having compatible communication interfaces.

The control unit both of the stationary type and portable type can comprise signaling and warning devices which can be alternatively of visual and/or acoustic type or any combination thereof.

An embodiment can provide pre-programmed periodic transmissions in which information of the diagnostic type, for example about its efficiency and consistency state, are communicated to the provided control unit or units so as to verify its effective operation.

Based on the above, the advantages of the different embodiments described of the system according to the present invention are clear. The monitoring module, i.e. the detecting units therefore communicate in an "intelligent" way only when the parameters monitored vary (acceleration, inclination, pressure, temperature, displacements, etc.) with a drastic reduction of data traffic compared to the conventional logic.

The application of this new monitoring logic is particularly advantageous both in terms of safety, for the timely communication of the variations and immediate consequent starting of the alert procedures (activation of acoustic and/or visual alarms), and in terms of energy savings, the data traffic being limited only to the communication of abnormal data and not to the continuous repetition of ordinary data, with the exception of sporadic information on the state of operation.

The known art US 6,292,108 provides a system comprising a plurality of self-supplied sensor units and a master unit of the site. Each sensor unit comprises a mechanical vibration sensor mechanically coupled with the civil structure and produces an analog electric signal representative of the mechanical vibrations in a localized area of the civil structure. A data acquisition circuit is electrically coupled with the mechanical vibration sensor and produces a flow of digital data representative of the mechanical vibrations from the analog electric signal. The flow of digital data is transmitted in wireless mode to the master of the site which is in turn provided with a wireless receiver coupled with the wireless signal programmed to collect and analyze the digital information of the plurality of sensor units.

The substantial difference of the present invention with respect to the aforesaid known art lies in the acquisition method: in the case of US 6,292,108 it is only triggered by an accelerometer that is useful in case of earthquakes, but the measurement may not be exhaustive in other conditions, i.e. floods in the absence of earthquakes, or the measure may not be proportional to the effect of the seismic event, for example in case of horizontal displacement, caving in of the ground; in document US2010/238027, the detection module continuously detects, much more simply and correctly, and communicates in an "intelligent" way only when the threshold of the parameters monitored is exceeded (acceleration, inclination, pressure, temperature, movements, etc.).

The difference is substantial because, as is also clearly set forth in the case of US 6,292,108, the monitoring system is activated by the accelerometer, therefore any other sensor connected to it does not detect if the accelerometer is not activated, while in the case of US2010/238027, the system anyhow continuously detects, analyzes the data and transmits it only when it exceeds the threshold of reference for which it was programmed. The low consumption mode lies in the fact that the transmission (which is the one involving the effective consumptions) is only limited to the communication of the extraordinary data and does not fall within the periodicity of the monitoring.

This operating condition cannot be independent of a wireless transmission; the decision to currently use LoRa^{®} is connected to fact of being able to cover plurikilometric distances and to overcome the problem of the line of vision between the transmitting and the receiving devices (not a negligible problem that is not mentioned in "doc.1," but that is well known to the work operators).

The wireless mode allows, with the device mentioned or similar devices, to be able to immediately transmit the piece of data to the master or aggregator module and especially to activate the luminous and/or acoustic alert devices without delays.

The possibility of implementing the distribution of the detecting units and therefore of the sensors in them provided on the ground also arises from this new way of understanding the monitoring. The detecting unit, i.e. the sensors, will also be able to be positioned at plurikilometric distances from the aggregator, i.e. from the control unit (for example thanks to the communication with the LoRa^{®} system), therefore improving the level of information derivable from the positioning site.

Given the different possibilities of application of the monitoring device described above, the structure containing the sensorized module varies according to the context and the object of the monitoring, and in particular various forms and characteristics of modules forming the detecting unit and the number and type of measuring sensors provided in each of said detecting units are provided. Moreover, the driving batteries and the wireless system for the transmission of the data can change depending on the type of application.

An embodiment provides that the detecting units are constituted by a housing casing or box in which the sensor or sensors and the control circuits of the sensors are housed, for collecting the measurement signals and for the processing thereof according to one or more of the methods described above, as well as the receiving/transmitting sections.

The power battery can be provided in the same casing or possibly in a separate casing connectable by cables to the casing containing the sensors.

An embodiment also provides the combination with possible electric power generating systems, such as for example photovoltaic panels, micro-turbine generators, or the like.

The casing can also be of the commercial type, preferably highly resistant, for example, but not limited to, the casings for switchboards and/or for electronic instrumentation. The materials by which the casings are constituted can be both of the plastic or metal type or of a combination of these materials.

According to a preferred embodiment, said casings have fixing members integrated or couplable therewith to be fixed to the structures present in the installation points, such as for example integrated or removably fixable brackets intended to be embedded in a wall, fixed by plugs or nails or piles to said structures.

The term structure refers to building manufactured products, such as walls, pillars, and the like or even the ground or rocks or other natural geological structures, the implementation of said fixing members being determined by the shape and composition of said structures and known per se, therefore the technician of the field can choose, at his discretion and without resorting to inventive activities, between the different possible known variations of said fixing members.

This embodiment of the system according to the invention is adapted in case of installations for the monitoring of operative infrastructures, such as for example, but not limited to, roads, highways, tunnels, bridges, viaducts, dams, support works, public, industrial and civil buildings, towers, monuments, etc.

A variation of the system according to the present invention is intended to be used in the event in which monitoring is required in areas subject to debris flows or avalanches, along rivers and waterways at risk of flooding, in areas at risk of flooding, in areas subject to detachments, falling of rocks and landslides from collapses and in any case where the kinematics could generate shocks and damage traditional casings.

In this case, an embodiment variation, in which the casing housing the sensor or sensors and the hardware of the detecting units as described above connects with the fixing members or the fixing structure by means of a flexible element interposed between said fixing support and/or the fixing structure and the detecting unit casing, becomes advantageous.

In an embodiment, said elastic element is constituted by a self-straightening joint in combination with, but not limited to, acceleration, inclination and position sensors and which is not only able to monitor the acceleration, inclination and other parameters, but which carries out the function of dampening possible shocks and of restoring the initial orientation or neutral orientation after the even that the event determined the deformation has finished, such as for example after the melting of the snow deposited by an avalanche or the transit of debris.

The continuous monitoring of the inclination can also provide information on the effective self-straightening conditions after the event.

An embodiment provides that a plurality of detecting units with their sensors, at least acceleration sensors, sensors of the relative position between different detecting units and/or inclination sensors and/or other sensors, are concatenated in succession by means of a self-straightening elastic joint interposed between each of two successive casings of two detecting units and between a first casing of a first detecting unit adjacent to the fixing structure and/or the fixing member, between said box and said fixing structure or said fixing member.

An embodiment of this configuration can be implemented according to one or more of the characteristics of the existing devices intended for the monitoring of geotechnical, geological-structural, hydrogeological, geophysical parameters of lands and rocks, and more in general of the geotechnical, mining and structural engineering described in documents n. 0001323688 dated 09/22/2004 and/or n. 001346108 dated 07/03/2008 and/or n. 0001405009 dated 12/16/2013 and/or n. 0001405010 dated 12/16/2013.

According to an embodiment that can be provided in combination with any of the variations previously described and which is particularly adapted in the variation provided with self-straightening elastic joints, both in the single-joint and multi-joint versions, the casing is made tubular and elongated in direction of its central axis, while the elastic joints are also oriented in the neutral position in line with the tubular casing or casings and can make movements at least of lateral inclination and/or of elongation and/or of rotation around their axis parallel to the elongation direction, while in combination with said joint, the detecting unit or detecting units concatenated between each other are provided with at least one sensor for measuring the movement of the detecting unit or units with respect to the fixing structure and/or with respect to one another along one or more, preferably along all degrees of freedom provided.

The detecting units of the single-joint, self-straightening, type are adapted for the monitoring of debris flows (debris flows, mud flows, soil slips) of modest height and more in general in the areas subject to the slipping of debris and to flood flows along torrents and rivers. In this case, the use of a piezometric sensor also allows to monitor the water draught during the flood event.

The detecting units concatenated between each other of the multi-joint, self-straightening, type are mainly suggested for monitoring snow mantles and the conditions that trigger avalanches.

The particular structure of modules constituted by single detecting units superimposed to one another and separated by flexible joints also allows to monitor the snow mass in more points and at more depth levels, both in terms of stability and temperature.

In an embodiment, said joints can be of the cylindrical type and the structures provided with cylindrical joints have high flexibility, but, all sections being equal, less straightening energy compared to structures in which the joints are conical and progressively taper with respect to the joint between the casings of the underneath detecting units.

Still according to an embodiment variation, when it is necessary to urgently monitor, during an event or after an event, areas subject to high hydrogeological risk (for example avalanches, landslides and floods) and/or in the case in which the site, for safety reasons, cannot be immediately accessed by the technicians in charge of verifying the stability and where it is therefore not possible to fix the monitoring instruments, particular structures positionable in the instable mass by helicopter can be used for the monitoring.

According to this embodiment variation, one or more detecting units achieved according to one or more of the preceding embodiment variations can be mounted in a framework shaped as a trestle or tripod whose center of gravity is lowered towards the supporting base determined by the divergent ends of the structure shaped as a trestle or tripod and within which, i.e. in the space defined by the ideal envelope surfaces defined by the uprights and crossbeams of the frame or tripod, one or more detecting units are supported.

The structure shaped as a trestle provides a pyramid shape with an upper vertex and a widened supporting base or a prism-like shape with an inverted triangular base inside which one or more detecting units are provided and distributed according to the dimensions and symmetries of the framework.

In the tripod structure, the crossing of the radial elements forms a housing space of the detecting unit or units.

The above-described embodiment was designed to contain all equipment necessary for the monitoring (sensors, control electronics, transmission systems, autonomous power systems, etc.) with the aim to also control the high risk stages in full safety and in complete autonomy.

This one of a kind system is able to process the kinematics of the potentially unstable mass, to co-exist with the same at the paroxysmal stage of instability and to monitor its behavior during the after-event up to the stasis phase.

According to an embodiment, the data acquired and managed by software present in the detecting unit remotely control the immediate activation of the acoustic or visual alarms for safeguarding public and private safety.

The system according to this embodiment is in particular intended for the automatic monitoring of natural events in fast evolution, where the time between the trigger and paroxysmal stage is very reduced and where the site cannot be accessed by the technical personnel for the execution of on-site inspections and/or installation of traditional monitoring instruments due to the high level of danger.

Further improvements and characteristics of the present invention are object of the sub-claims.

These and other characteristics and advantages of the present invention will become clearer in the following description of some exemplary embodiments shown in the accompanying drawings, in which:
Figure 1 shows a block diagram of an embodiment of a detecting unit according to the present invention.
Figure 2 shows a block diagram of a control unit acting as an aggregator module according to an embodiment of the present invention.
Figure 3 shows a scheme of a first embodiment of a system according to the present invention particularly suitable for monitoring operative infrastructures.
Figures 4, 5a and 5b schematically show three alternative embodiments of the system according to the present invention, which are provided with at least one self-straightening elastic element connecting at least one detecting unit with the fixing structure or a fixing member in turn fixed to said structure.
Figures 6, 7 and 8 show three embodiment variations of a further embodiment of the sacrificial type of the present invention, respectively having a trestle shape with a triangular base, a tetrapod and a multi-trestle shape with a quadrangular base for mounting the monitoring system during an event.
Figure 9 shows an example of a system achieved by using the embodiment variations of figures 6, 7 and 8 for monitoring the still not stable front of an avalanche in combination with the control unit (aggregator) integrated with the acoustic/visual alert device 91.

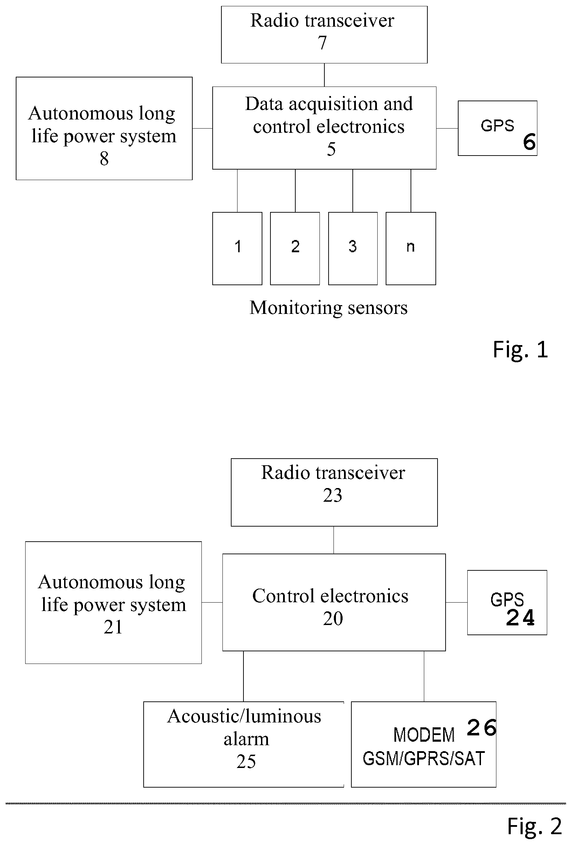

With reference to figures 1 and 2, these respectively show the block diagram of an exemplary embodiment of a detecting unit and a control unit both provided in a system according to the present invention, in which several detecting units are distributed over an extended area and measure critical geophysical, mechanical and/or chemical parameters of said area in different points.

Since the distribution of single detecting units or of combinations of more detecting units in points spaced from each other implies difficulties and significant costs for their connection by cables, and the interrogation of the detecting units by one control unit according to data collecting schemes stored in the various measuring units requires relatively long times, which are not compatible with the speed of the events intended to be monitored, according to the present invention, the detecting units are provided with a processing unit to process the measurement signals of the at least one sensor that determines the variation of the measured signals measured with respect to a preset value of reference and controls that the communication unit is activated as the detected signal is transmitted when the difference between said measured signal and said signal of reference exceeds a preset value, also preset or presettable and/or only when the event of exceeding a predetermined, presettable, threshold parameter takes place, such as the threshold value for the detected signal and/or a threshold value for a maximum allowable difference between the present threshold value and the measured signal value.

An example of an operative unit provides a plurality of sensors denoted by 1, 2, 3, n and which are of the suitable type for detecting physical quantities related to the movement, such as the acceleration, the inclination, the movement distance, the movement speed and others and/or physical environmental parameters, such as the temperature, humidity, solar radiation and others, as well as possible chemical parameters, such as, but not only, the presence of given substances or combinations thereof.

The sensors 1, 2, 3 n provide measuring signals to a data acquisition and control electronics denoted by 5. This unit is configured both via hardware and, for example, via software to carry out a comparison of the parameter values measured by the sensors and to compare them with the threshold values preset or presettable in said electronics 5. A positioning signal, obtained thanks to a GPS receiver 6 and which data is compared with the position indications acquired at previous times to measure the extent of a possible displacement and the comparison with a threshold value of said displacement, is also provided to the electronics 5.

The data acquisition and control electronics 5 is connected to a radio transceiver 7 which can operate according to one or more different types of wireless communication networks among those known and suitable for covering the distances to which the signals must be transmitted.

The data acquisition and control electronics 5 is further configured to activate the transmission towards a remote control station of which an exemplary embodiment is shown in figure 2, when the comparison results between the values measured by the sensors and those of preset thresholds are different from each other.

It is possible to provide different embodiment variations in combination or in alternative between them, depending on the functionalities that the system must have.

A first variation can provide that the detecting units only transmit to the control unit an indication that one or more measurement values of one or more sensors has deviated from the threshold value; in alternative or in combination, a variation can provide to also send the measurement value and the parameter to which it refers; in alternative or in combination with each of the first two, a further variation can provide that the transmission of a variation signal of one or more of the parameters measured with respect to the corresponding threshold values only occurs when said variation exceeds a given maximum value of the tolerable difference between the measured value and the corresponding threshold value. Also in this case, the transmission can possibly comprise not only the signaling of this event, but also the value of the difference between the data measured and the corresponding threshold value and/or the value of how much this difference exceeds the maximum tolerable value for the same.

The power to the circuits of the detecting units described above is ensured by a long life system 8, such as for example a long life battery and/or in combination with electric power generating means that can comprise, in alternative or in combination, photovoltaic panels, micro-turbines activating electric generators both operating with air flows and with liquid flows.

The control unit of figure 2 is intended to receive the data transmitted by the single detecting units of which an embodiment is shown in figure 1. Each of these is advantageously associated to a unique identification code and has its specific position different than that of the other detecting units.

The control unit has the function of aggregator of the data received from the various detecting units and comprises a control electronics 20 to which a power system 21 of the long life type, and possibly provided in combination with one or more electric power generators operating according to alternative physical principles, is connected. A radio transceiver 23, which operates using the corresponding types of communication protocols of the transceiver 7 of the detecting units, allows to receive the signals from said detecting units and also to possibly be able to carry out intervention operations on said detecting units, such as changing the threshold values, software upgrades, software maintenance activities, and other typical operations.

A GPS 24 detects the position of the control unit and associates it thereto.

The control electronics 20 is only configured by hardware or a combination of hardware and software to perform the functions of receiving the signals autonomously transmitted by the detecting units, and to process them, for example by temporally aligning them between each other and by generating maps of the real time temporal course of events in the area monitored thanks to the detecting units. Based on these processes, the control electronics can cause the emission of signals corresponding to the actual conditions of the area monitored in real time with the events detected. These signals can occur by activating acoustic and/or visual alarms denoted by 25. Further signals or transmissions of the data collected to further remote units both personal and centralized are possible through a wireless line of the telephonic and/or satellite type thanks to a modem 26 which incorporates the various protocols, such as for example the GSM, GPRS or SAT protocols or others.

As is clear and as already underlined, the detecting units therefore communicate in an "intelligent" way only when the parameters monitored vary (acceleration, inclination, pressure, temperature, movements, etc.) with a drastic reduction of data traffic compared to the traditional logic.

It is possible that the detecting units are provided with a diagnostic subsystem that is programmed to send, cyclically and at presettable time intervals, information on the operating conditions of the corresponding detecting unit. However, this activity has reduced and marginal impact on the monitoring operations and the life of the autonomous power systems.

In the examples of figures 1 and 2, the user interfaces that make it possible to dialog with the single detecting units and with the control unit are not shown. These can be of any known type, such as keyboards, touchscreens, displays, mouses, touchpads, readers/editors of transportable storage media, etc.

A particular embodiment of communication interfaces, for the input of data and/or commands or for uploading and upgrading software both in the detecting units and in the control units, can be constituted by portable terminals, such as also cell phones or smartphones which communicate wirelessly with the detecting units and/or with the control units and which allow to remotely intervene on the settings thereof.

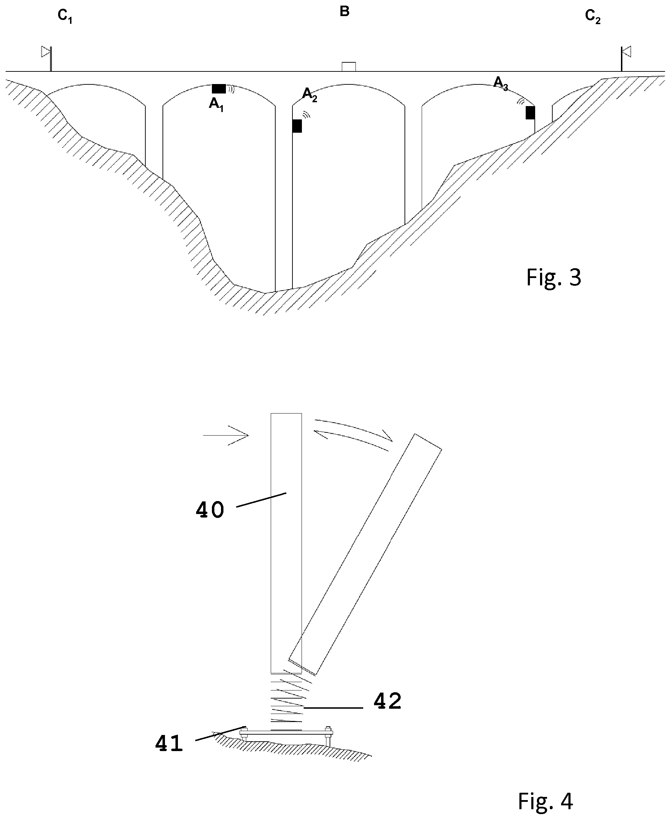

Figure 3 shows a system according to the present invention that can be provided in combination with detecting units and control units according to the embodiments of figures 1 and 2.

A1, A2, An denote the detecting units, while B denotes a control unit and C1 and C2 denote two acoustic/visual signaling units.

The system is in its configuration required for the monitoring of operative infrastructures such as for example roads, highways, tunnels, bridges, viaducts, dams, support works, public, industrial and civil buildings, towers, monuments, etc. In the example shown, the detecting units monitor the conditions of a bridge.

The electronics and sensors described in figures 1 and 2 are enclosed in special highly resistant and watertight boxes.

These can be provided with a lock.

The fixing to the structure occurs by means of supports which are made so that to be adapted to cooperate with the characteristics of the infrastructure to be monitored and the construction thereof. The box contains measuring sensors, the local control electronics and the transceiver.

In an embodiment, the transceiver is advantageously constituted by a long range radio frequency device for telecommunication.

According to an embodiment, the long life driving batteries can be housed inside the same box provided for the sensors and electronics or positioned in a separate box and are connected by cable to the electronics of the detecting unit: a possible external photovoltaic panel with a suitable charge regulator and/or other electric power generating devices can also be present.

As far as the casings or boxes are concerned, products of the commercial type, such as those for switchboards and/or electronic instruments, can be used. In an embodiment variation, the casings are specifically made of plastic or metal materials or a combination of these materials.

The box containing the instrumentation is preferably shaped and sized so that to allow an adequate protection of the equipment and sensors installed therein.

As far as the control unit and/or signaling units are concerned, they can also be housed in casings made in a similar way as those of the detecting units and by obviously modifying them according to the different requirements provided for the control units and signaling units.

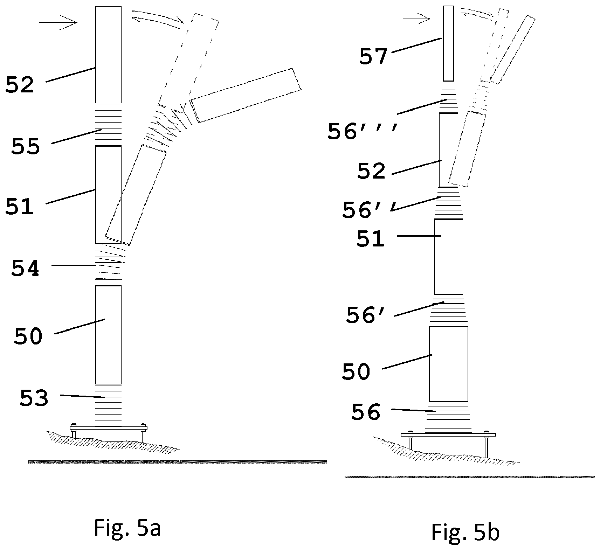

Figures 4, 5a and 5b show three variations of a further embodiment of the arrangement of the boxes or casings containing the detecting units.

The embodiment of figure 4 provides a tubular and elongated shaped case with substantially circular sections having a predefined axial length for each detecting unit. This case 40 is constrained to the fixing structure, in this case to the ground by fixing means 41 which connect with the case 40 thanks to an elastic joint 42 with a self-straightening action.

The self-straightening joint 42 is shown in the form of helical spring, but can advantageously be made like one or more of the embodiments described in the documents IT 0001323688 dated 09/22/2004 IT 001346108 dated 07/03/2008, IT 0001405009 dated 12/16/2013, IT 0001405010 dated 12/16/2013.

As is clear in the figure, the joint 42 allows the case 40 to always return in the initial position, i.e. in the neutral position in which it is perpendicular to the ground to which it is anchored.

Providing, in combination with the self-straightening joint, accelerometer and/or inclinometer sensors and possibly of axial elongation of the joint and/or of rotation around the joint axis, it is possible to measure the effects of particular events such as those that occur in areas subject to debris flows or avalanches, along rivers and waterways at risk of flooding, in areas at risk of flooding, in areas subject to detachments, falling of rocks and landslides from collapses and in any case where the kinematics could generate shocks.

A self-straightening joint able not only to monitor the acceleration, inclination, etc., and to dampen possible shocks, but also to restore itself, for example after the melting of snow or the transit of debris, can be used in the preferred embodiment. The continuous monitoring of the inclination can also provide information on the effective self-straightening conditions after the event.

Figures 5a and 5b show two variations of a further embodiment in which a plurality of detecting units 50, 51, 52 is concatenated in a sequence of said detecting units thanks to a self-straightening elastic joints 53, 54, 55.

Each detecting unit can have a combination of sensors comprising for example accelerometer and/or inclinometer sensors and possibly of axial elongation of the joint and/or of rotation around the joint axis and each detecting unit of the succession is displaceable according to the degrees of freedom allowed by the joint with respect to the adjacent units independently from same.

Also in this case, the construction of the joints and the detecting units can be achieved mutatis mutandis, similarly to one or more of the embodiments described in the documents IT 0001323688 dated 09/22/2004 IT 001346108 dated 07/03/2008, IT 0001405009 dated 12/16/2013, IT 0001405010 dated 12/16/2013, which description is considered part of the present document.

The behavior of this multi-joint variation is shown in figure 5a.

In the variation of figure 5b, the elastic joints do not have an essentially cylindrical shape, but are conical and have a lower base larger than the upper one, while the diameters of the joints 56, 56', 56", 56‴ and those of the casings 50, 51, 52, 57 to which they connect progressively taper with respect to the previous joints and the previous cases.

This embodiment requires less mechanical energy to bring back the single cases in the aligned standing position.

The embodiments of figures 5a and 5b are mainly indicated for the monitoring of the snow mantle, also of significant thickness and in avalanche triggering conditions.

The particular structure of superimposed modules separated by flexible joints also allows to monitor the snow mass in more points both in terms of stability and temperature.

The structures provided with cylindrical joints have high flexibility, but, all sections being equal, less straightening energy with respect to those consisting of conical joints.

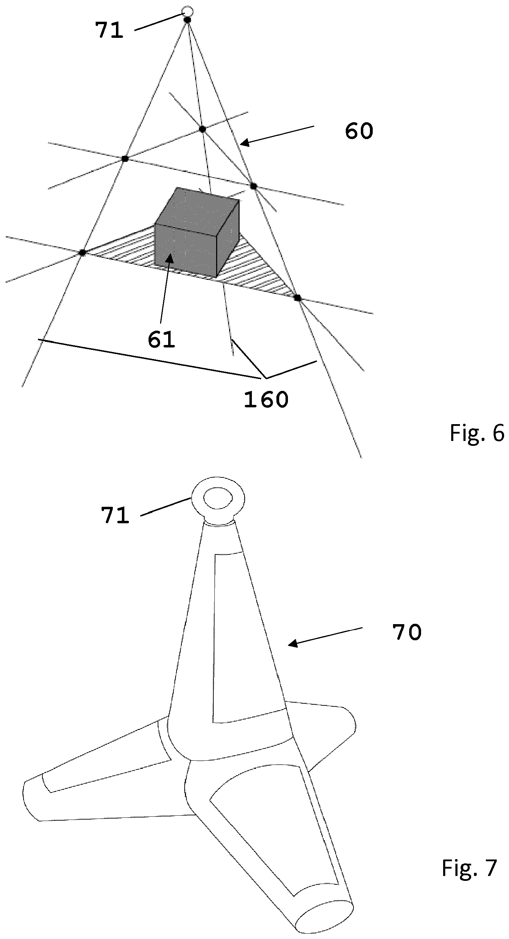

The figures 6 to 8 shown variations of a further embodiment of the invention which can be used when it is necessary to urgently monitor, during an event or after an event, areas subject to high hydrogeological risk (for example avalanches, landslides and floods) and/or in the case in which the site, for safety reasons, cannot be immediately accessed by the technicians in charge of verifying the stability and where it is therefore not possible to fix the monitoring instruments. These are particular monitoring structures that can be positioned in the instable mass by helicopter.

Figure 6 shows a supporting framework 60 of a detecting unit 61, which is shaped like a pyramidal trestle with triangular base.

The trestle structure can be made of relatively low cost materials, such as Innocenti pipes or similar constructive elements for scaffolding, and supports a highly resistant, watertight container that is able to contain the electronics provided for the detecting unit, the measuring sensors, the data transmission systems (GSM, GPRS, Radio, wireless) together with batteries for the autonomous operation. The trestle structure is particularly adapted for the monitoring of avalanches, after the event, and is easily mountable by helicopter without ground personnel. It is also easily achievable on site by mounting the Innocenti pipes.

The highly resistant container is fixed inside the trestle 60. This structure has protruding legs 160, which penetrate the snow mantle, and quickly stabilizes thanks to its shape and weight, also being put in a condition to immediately monitor the movements.

Figure 7 shows a structure of the tetrapod type denoted by 70, which is provided for being installed by means of drones whenever it is impossible to work safely by helicopter. In fact, it can be made of steel or of plastic material with reduced weight and dimensions. It is mainly intended to monitor the detachment areas of the avalanche bodies, but it can also be used in landslides. Its particular structure makes it easy to achieve balanced conditions in snow bodies. The detecting unit is housed inside the body of the tetrapod 70. A hooking ring 71, such as the one provided at the vertex opposite the base of the embodiment of figure 6, is provided at least at one end of the arms.

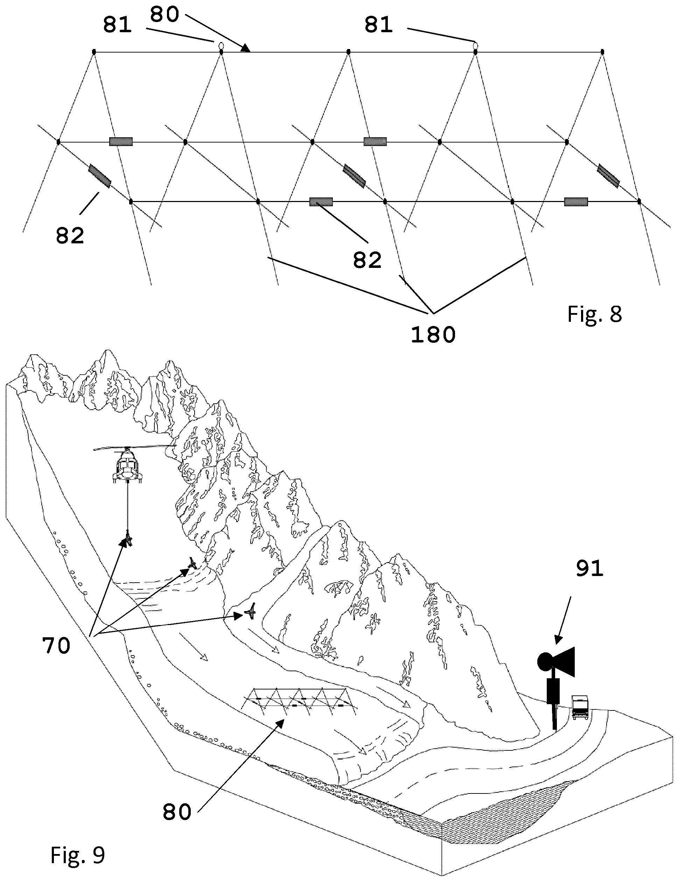

Figure 8 shows a variation of figure 6, in which the trestle structure 80 is made multiple.

As the other embodiments, it has hooking rings 81 at the upper vertexes. Similarly to the embodiment of figure 6 of which it is an extension, it has terminals 180 intended to slip into the material to be monitored.

This configuration is particularly adapted for the after event monitoring of the headland areas of avalanche events having significant transversal development. Like the simple trestle structure of figure 6, it is easily implemented by mounting Innocenti pipes or similar and can be handled by helicopter. The monitoring instruments, i.e. the detecting units 82, can be fixed directly to the tubular elements so that to reconstruct the deformation of the snow mantle along the entire section monitored.

Figure 9 shows a system according to the present invention which uses units made according to figures 6, 7 and 8, which are positioned by helicopter or drones.

The system particularly suited to monitor avalanches during the paroxysmal and after event stage is therefore constituted by:
- one or more remote detecting units in a watertight and highly resistant container of various shapes and sizes with measuring sensors such as for example, but not limited to, accelerometers, inclinometers, temperature sensors, pressure sensors, etc., control electronics, devices for data acquisition and broadcasting, for example of the GSM, GPRS, SAT, Radio and wireless types, and for radiolocalization such as the GPS type with relative batteries for the autonomous operation;
- a frame- or monocoque-like coating and protection structure variable in size and in the exposed surfaces to generate the necessary additional protections and for a suitable coupling with the means or body to be monitored.

According to an embodiment, the sensors present in the detecting units of the system are directly connected to a communication unit also positioned inside the structure and are configured to communicate in an "intelligent" way only if the quantities monitored by one or more of the single present sensors suffer variations with respect to the preset thresholds for these quantities. This new logic has a more immediate management of alarms and allows a considerable reduction in consumptions, therefore in view of a greater autonomy. The module can occasionally provide information on its efficiency and consistency state only so that to ensure its constant active monitoring presence.

The detecting units transmit the data and alarm detections of the various sensors to an external control unit that can be both fixed and movable. This information will therefore be processed by specific software for the automatic displaying of the parameters detected.

The electronics inside the control unit can transmit, in real time, automatic commands for the alarm signals to one or more acoustic or visual devices.

## Claims

1. System for the analysis and automatic monitoring, remotely and in real time, of structures, infrastructures and slope sectors with high hydrogeological risk and susceptible to collapses, landslides, and/or avalanches, in case of fast paroxysmal events, with the aim of safeguarding the public or private safety, comprising:
one or more detecting unit (A₁, A₂, A₃) with one or more measuring sensors (1, 2, 3) to measure a physical, geological, chemical, environmental parameter at a detection point, the unit being positioned or positionable at a predetermined detection point, preferably a plurality of detecting units positioned or positionable respectively in one of a plurality of detection points arranged over an area, each unit comprising one or more measuring sensors to measure a physical, geological, chemical, environmental parameter;
**characterized in that** the system further comprises:
at least one control unit (C₁, C₂) to collect detection signals and at least partially process said signals or transmit said signals to a remote processing server;
said detecting units and said control unit being provided with a receiving and/or transmitting communication unit (7), through which said detecting units and the control unit communicate with each other and possibly with additional remote client or server units,
and wherein only when there is a change in at least one of the monitored parameters relating to physical quantities related to movement, such as acceleration, inclination, movement distance, and movement speed, and/or physical parameters such as temperature, humidity, and solar radiation and/or a change of at least one of the monitored parameters relating to chemical parameters, such as presence of given substances , the detecting units immediately communicate with the control unit which operates as an aggregator of the data received from the one or more detecting units and to process the data and based thereon cause the emission of signals corresponding to the actual conditions of the area monitored by activating acoustic and/or visual alarms and
wherein the control unit comprises signaling and warning devices which can be alternatively of visual and/or acoustic type or any combination thereof,
the detecting units are provided with a processing unit (5) to process the detected signals of the one or more sensors and which determines the variation of one or more of the detected signals with respect to a preset reference value and controls that the communication unit is activated so that the detected signal is immediately transmitted when the difference between said detected signal and said reference signal exceeds a predetermined value which is presettable too and/or when the event of exceeding a predetermined, presettable threshold parameter for the detected signal takes place, and the said signaling and warning devices being immediately activated, and
wherein the receiving and/or transmitting communication section through which said detecting units and the control unit communicate with each other and possibly with additional remote client or server units consist in Wireless Long Range Radio Frequency Devices.

2. System according to claim 1 in which, in combination with said detecting units, a data and/or control entry unit is provided which can be constituted by the control unit itself and/or possibly also a portable control unit, both the stationary and/or portable control units are provided with human-machine interfaces so as to be able to input data and/or controls and to remotely modify said threshold values or parameters.

3. System according to one or more of the preceding claims, in which the detecting units comprise two or more sensors which can consist of all or part of the sensors selected among the following sensors: acceleration sensors, inclination sensors, pressure sensors, temperature sensors, position sensors, movement sensors.

4. System according to one or more of the preceding claims, in which pre-programmed periodic transmissions are provided in which diagnostic information, for example about its efficiency and consistency state, are communicated to the provided control unit or units, so as to verify its effective operation.

5. System according to one or more of the preceding claims, in which the detecting units comprise a casing or housing box in which not only the sensor(s) and the sensor control circuits are housed, for collecting the measurement and processing signals thereof, but also the receiving/transmitting sections and optionally the driving battery which can be provided, in case, in a separate casing connectable by cables to the casing containing the sensors.

6. System according to one or more of the preceding claims, in which electric power generating systems, such as photovoltaic panels, micro-turbine generators, or the like are provided.

7. System according to claim 5 or 6 , wherein said casings have fixing members integrated or couplable therewith to be fixed to the structures that are at installation points, such as for example integrated or removably fixable brackets intended to be embedded in a wall, fixed by plugs or nails or piles to said structures.

8. System according to any one of claims 5 to 7 , in which the said casing for housing both the sensor(s) and the hardware of the detecting units, as described above, is connected either to a fixing member or a fixing structure by means of a flexible element which is interposed between said fixing support and/or said fixing structure and the casing of the detecting unit, the said flexible element being designed as a self-straightening joint.

9. System according to claim 8, in which said self-straightening joint is provided in combination with one or more of the following sensors: acceleration, inclination, pressure, temperature, position and movement sensors.

10. System according to any one of claims 5 to 9 , wherein a plurality of detecting units with their own sensors are provided, at least acceleration sensors, sensors of the relative position between different detecting units and/or inclination sensors and/or other sensors, the detecting units being concatenated in succession by means of a self-straightening elastic joint interposed between each of two successive casings of two detecting units and between a first casing of a first detecting unit adjacent to the said fixing structure and/or the fixing member, between said box and said fixing structure or said fixing member.

11. System according to any one of claims 5 to 10 , in which the casing is made tubular and elongated in the direction of its central axis, whereas also the elastic joints are oriented in neutral position in line with the tubular cases and can carry out movements at least of lateral inclination and/or elongation and/or rotation around their own axis parallel to the elongation direction, whereas in combination with said joint the detecting unit(s) concatenated to each other are provided with at least one sensor for measuring the movement of the detecting unit(s) with respect to the fixing structure and/or with respect to one another, preferably along one or more degrees of freedom preferably along all the provided degrees of freedom.

12. System according to any one of claims 8 to 11 in which said joints can be of cylindrical or conical type and progressively taper with respect to the joint between the casings of the underneath detecting units.

13. System according to one or more of the preceding claims, in which one or more detecting units are mounted in a framework shaped as a trestle, or tetrapod, or multiple-trestle, whose center of gravity is lowered towards the supporting base determined by the divergent ends of the structure shaped as a trestle, or tetrapod, or multiple-trestle, and within which, i.e. in the space defined by the ideal envelope surfaces defined by the uprights and crossbeams of the frame or tetrapod, one or more detecting units are supported.

## Patentansprüche

1. System zur Analyse und automatischen Überwachung, ferngesteuert und in Echtzeit, von Strukturen, Infrastrukturen und Berghangsektoren mit hohem hydrogeologischem Risiko, die anfällig für Einstürze, Erdrutsche und/oder Lawinen, im Falle schneller paroxysmaler Ereignisse, mit dem Ziel, die öffentliche oder private Sicherheit zu gewährleisten, umfassend:
eine oder mehrere Erfassungseinheiten (A1, A2, A3) mit einem oder mehreren Messsensoren (1, 2, 3) zur Messung eines physikalischen, geologischen, chemischen oder umweltbezogenen Parameters an einem Erfassungspunkt, wobei die Einheit an einem vorbestimmten Erfassungspunkt und vorzugsweise an einer Vielzahl von Erfassungseinheiten positioniert oder positionierbar ist, die jeweils an einem von mehreren über einen Bereich angeordneten Erfassungspunkten positioniert oder positionierbar sind, wobei jede Einheit einen oder mehrere Messsensoren zur Messung eines physikalischen, geologischen, chemischen oder umweltbezogenen Parameters umfasst,
**dadurch gekennzeichnet, dass** das System weiterhin umfasst:
mindestens eine Steuereinheit (C1, C2), um Erfassungssignale zu sammeln und diese Signale zumindest teilweise zu verarbeiten oder an einen Remote-Verarbeitungsserver zu übertragen,
dass die Erfassungseinheiten und die Steuereinheit mit einer Empfangs- und/oder Sendekommunikationseinheit (7) ausgestattet sind, über die die Erfassungseinheiten und die Steuereinheit miteinander und möglicherweise mit zusätzlichen remoten Client- oder Servereinheiten kommunizieren,
und wobei nur wenn eine Änderung von mindestens einem der überwachten Parameter, die sich auf bewegungsbezogene physikalische Größen wie Beschleunigung, Neigung, Bewegungsdistanz und Bewegungsgeschwindigkeit beziehen, und/oder physikalische Parameter wie Temperatur, Feuchtigkeit und Sonnenstrahlung und/oder eine Änderung von mindestens einem der überwachten Parameter, die sich auf chemische Parameter beziehen, auftritt, die Erfassungseinheiten unmittelbar mit der Steuereinheit kommunizieren, die als Aggregator der von der einen oder den mehreren Erfassungseinheiten empfangenen Daten dient, um die Daten zu verarbeiten und auf deren Grundlage die Ausgabe von Signalen zu veranlassen, die den tatsächlichen Bedingungen des überwachten Bereichs entsprechen, indem akustische und/oder visuelle Alarme ausgelöst werden, und
wobei die Steuereinheit Signalisierungs- und Warnvorrichtungen umfasst, die wahlweise visueller und/oder akustischer Art oder einer beliebigen Kombination davon sein können,
die Erfassungseinheiten mit einer die erfassten Signale der einen oder mehreren Sensoren verarbeitenden Verarbeitungseinheit (5) ausgestattet sind, welche die Variation eines oder mehrerer erfasster Signale im Vergleich zu einem voreingestellten Referenzwert bestimmt und die Aktivierung der Kommunikationseinheit kontrolliert, sodass das erfasste Signal sofort übertragen wird, wenn die Differenz zwischen dem erfassten Signal und dem Referenzsignal einen vorbestimmten, ebenfalls einstellbaren Wert überschreitet, und/oder wenn das Ereignis des Überschreitens eines vorbestimmten, einstellbaren Schwellenwerts für das erfasste Signal eintritt, wobei die genannten Signalisierungs- und Warnvorrichtungen sofort aktiviert werden, und
wobei die Empfangs- und/oder Sendekommunikationssektion, über die die Erfassungseinheiten und die Steuereinheit miteinander und möglicherweise mit zusätzlichen remoten Client- oder Servereinheiten kommunizieren, aus drahtlosen Langstrecken-Funkgeräten besteht.

2. System nach Anspruch 1, wobei in Kombination mit den Erfassungseinheiten eine Daten- und/oder Steuereingabeeinheit vorgesehen ist, welche durch die Steuereinheit selbst und/oder möglicherweise auch durch eine tragbare Steuereinheit gebildet werden kann, wobei sowohl die stationären als auch die tragbaren Steuereinheiten mit Mensch-Maschine-Schnittstellen versehen sind, um Daten und/oder Steuerungen eingeben und die genannten Schwellenwerte oder Parameter ferngesteuert ändern zu können.

3. System nach einem oder mehreren der vorhergehenden Ansprüche, wobei die Erfassungseinheiten zwei oder mehr Sensoren umfassen, die aus allen oder Teilen der Sensoren bestehen können, die aus den folgenden Sensoren ausgewählt sind: Beschleunigungssensoren, Neigungssensoren, Drucksensoren, Temperatursensoren, Positionssensoren, Bewegungssensoren.

4. System nach einem oder mehreren der vorangehenden Ansprüche, wobei vorprogrammierte periodische Übertragungen vorgesehen sind, in denen Diagnoseinformationen, beispielsweise über dessen Effizienz und Konsistenzzustand, an die vorgesehene(n) Steuereinheit(en) übermittelt werden, um deren effektiven Betrieb zu überprüfen.

5. System nach einem oder mehreren der vorhergehenden Ansprüche, wobei die Erfassungseinheiten ein Gehäuse oder eine Aufnahmebox umfassen, in dem/der nicht nur der/die Sensor(en) und die Sensor-Steuerschaltungen zur Sammlung der Mess- und Verarbeitungssignale untergebracht sind, sondern auch die Empfangs-/Sendesektionen und gegebenenfalls die Antriebsbatterie, die gegebenenfalls in einem separaten Gehäuse vorgesehen sein kann, das über Kabel mit dem die Sensoren enthaltenden Gehäuse verbunden werden kann.

6. System nach einem oder mehreren der vorhergehenden Ansprüche, wobei elektrische Energieerzeugungssysteme, wie beispielsweise Photovoltaikpaneele, Mikroturbinengeneratoren oder Ähnliches, vorgesehen sind.

7. System nach Anspruch 5 oder 6, wobei die Gehäuse integrierte oder damit koppelbare Befestigungselemente aufweisen, die zur Befestigung an den in den Installationspunkten befindlichen Strukturen bestimmt sind, wie zum Beispiel integrierte oder abnehmbar befestigbare Bügel, die dazu bestimmt sind, in eine Wand eingebettet zu werden, und durch Dübel oder Nägel oder Pfähle an diesen Strukturen befestigt werden.

8. System nach einem der Ansprüche 5 bis 7, wobei das zur Unterbringung sowohl des Sensors/der Sensoren als auch der Hardware der Erfassungseinheiten dienende Gehäuse, wie oben beschrieben, entweder mit einem Befestigungsorgan oder einer Befestigungsstruktur mittels eines flexiblen Elements verbunden ist, das zwischen dem Befestigungselement und/oder der Befestigungsstruktur und dem Gehäuse der Erfassungseinheit angeordnet ist, wobei das flexible Element als selbstausrichtendes Gelenk ausgebildet ist.

9. System nach Anspruch 8, wobei das selbstausrichtende Gelenk in Kombination mit einem oder mehreren der folgenden Sensoren vorgesehen ist: Beschleunigungs-, Neigungs-, Druck-, Temperatur-, Positions- und Bewegungssensoren.

10. System nach einem der Ansprüche 5 bis 9, wobei eine Vielzahl von Erfassungseinheiten mit ihren eigenen Sensoren vorgesehen sind, und zwar mindestens Beschleunigungssensoren, Sensoren für die relative Position zwischen verschiedenen Erfassungseinheiten und/oder Neigungssensoren und/oder andere Sensoren, wobei die Erfassungseinheiten nacheinander mittels eines selbstausrichtenden elastischen Gelenks verkettet sind, das zwischen jedem von zwei aufeinanderfolgenden Gehäusen von zwei Erfassungseinheiten und zwischen einem ersten Gehäuse einer an die Befestigungsstruktur und/oder das Befestigungselement angrenzenden ersten Erfassungseinheit, zwischen der Box und der Befestigungsstruktur oder dem Befestigungsorgan angeordnet ist.

11. System nach einem der Ansprüche 5 bis 10, wobei das Gehäuse rohrförmig und in Richtung seiner Mittelachse langgestreckt ist, wobei auch die elastischen Gelenke in neutraler Position in einer Linie mit den rohrförmigen Gehäusen ausgerichtet sind und Bewegungen in Form von zumindest einer seitlichen Neigung und/oder einer Längung und/oder einer Drehung um ihre eigene Achse parallel zur Längungsrichtung ausführen können, wobei in Kombination mit dem Gelenk die miteinander verkettete(n) Erfassungseinheit(en) mit mindestens einem Sensor zum Messen der Bewegung der Erfassungseinheit(en) in Bezug auf die Befestigungsstruktur und/oder in Bezug aufeinander, vorzugsweise entlang eines oder mehrerer Freiheitsgrade, vorzugsweise entlang aller vorgesehenen Freiheitsgrade, versehen sind.

12. System nach einem der Ansprüche 8 bis 11, wobei die Gelenke vom zylindrischen oder konischen Typ sein können und sich in Bezug auf die Verbindung zwischen den Gehäusen der unterliegenden Erfassungseinheiten allmählich verjüngen.

13. System nach einem oder mehreren der vorhergehenden Ansprüche, wobei eine oder mehrere Erfassungseinheiten in einem bockförmigen Gestell oder Tetrapod oder Mehrfachbock montiert sind, dessen Schwerpunkt in Richtung der durch die auseinanderlaufenden Enden des bockförmigen Gestells oder Tetrapods oder Mehrfachbocks bestimmten Auflagebasis abgesenkt ist und innerhalb dessen, d.h. in dem Raum, der durch die von den Ständern und Querstreben des Gestells oder Tetrapods definierten idealen Hüllflächen definiert ist, eine oder mehrere Erfassungseinheiten gelagert sind.

## Revendications

1. Système d'analyse et de surveillance automatique, à distance et en temps réel, de structures, d'infrastructures et de secteurs en pente à risque hydrogéologique élevé et susceptibles d'effondrements, de glissements de terrain et/ou d'avalanches, en cas d'événements paroxystiques rapides, dans le but de sauvegarder la sécurité publique ou privée, comprenant:
une ou plusieurs unités de détection (A1, A2, A3) avec un ou plusieurs capteurs de mesure (1, 2, 3) pour mesurer un paramètre physique, géologique, chimique et environnemental en correspondance d'un point de détection, l'unité étant positionnée ou pouvant être positionnée en correspondance d'un point de détection prédéterminé, de préférence une pluralité d'unités de détection positionnées ou pouvant être positionnées respectivement dans l'un d'une pluralité de points de détection disposés sur une zone, chaque unité comprenant un ou plusieurs capteurs de mesure pour mesurer un paramètre physique, géologique, chimique et environnemental;
**caractérisé en ce que** le système comprend en outre:
au moins une unité de commande (C1, C2) pour collecter des signaux de détection et au moins partiellement traiter lesdits signaux ou transmettre lesdits signaux à un serveur de traitement à distance;
lesdites unités de détection et ladite unité de commande étant pourvues d'une unité de communication de réception et/ou transmission (7), à travers laquelle lesdites unités de détection et l'unité de commande communiquent entre elles et éventuellement avec des unités clients ou serveurs supplémentaires à distance,
et dans lequel, dès qu'il y a un changement d'au moins un des paramètres surveillés relatifs aux ampleurs physiques liées au mouvement, telles que l'accélération, l'inclinaison, la distance de déplacement et la vitesse de déplacement, et/ou à des paramètres physiques tels que la température, l'humidité et l'irradiation solaire et/ou d'un changement d'au moins un des paramètres surveillés relatifs aux paramètres chimiques, tels que la présence de certaines substances, les unités de détection communiquent immédiatement avec l'unité de commande qui agrège les données reçues d'une ou de plusieurs unités de détection et traitent les données, et en fonction de celles-ci, génère l'émission des signaux correspondant aux conditions réelles de la zone surveillée à travers l'activation d'alarmes acoustiques et/ou visuelles, et
dans lequel l'unité de commande comprend des dispositifs de signalisation et d'avertissement pouvant être alternativement de type visuel et/ou acoustique ou de toute combinaison des mêmes,
les unités de détection sont pourvues d'une unité de traitement (5) pour traiter les signaux détectés par l'un ou plusieurs capteurs et qui détermine la variation d'un ou plusieurs des signaux détectés par rapport à une valeur de référence prédéfinie et qui contrôle que l'unité de communication soit activée de sorte à ce que le signal détecté soit immédiatement transmit lorsque la différence entre ledit signal détecté et ledit signal de référence dépasse une valeur prédéterminée qui peut également être prédéfinie et/ou qui active immédiatement les dispositifs de signalisation et d'avertissement lorsque le signal détecté dépasse un paramètre seuil prédéterminé et prédéfini, et
dans lequel la section de communication de réception et/ou de transmission à travers laquelle lesdites unités de détection et l'unité de commande communiquent entre elles et éventuellement avec des unités clients ou serveurs supplémentaires à distance consistent en des dispositifs de radiofréquence sans fil à longue portée.

2. Système selon la revendication 1 dans lequel, en combinaison avec lesdites unités de détection, une unité de saisie de données et/ou de commande est prévue et peut être constituée par l'unité de commande elle-même et/ou éventuellement également par une unité de commande portable, les unités de commande fixes et/ou portables sont pourvues d'interfaces homme-machine de sorte à pouvoir saisir des données et/ou des commandes et modifier à distance lesdites valeurs ou paramètres seuils.

3. Système selon l'une ou plusieurs des revendications précédentes, dans lequel les unités de commande comprennent deux ou plusieurs capteurs pouvant consister de tous ou d'une partie des capteurs sélectionnés parmi les capteurs suivants: capteurs d'accélération, capteurs d'inclinaison, capteurs de pression, capteurs de température, capteurs de position, capteurs de mouvement.

4. Système selon l'une ou plusieurs des revendications précédentes, dans lequel des transmissions périodiques programmées sont prévues et à travers lesquelles des informations de diagnostic, par exemple concernant son état d'efficacité et de cohérence, sont communiquées à l'unité ou aux unités de commande prévues, de sorte à vérifier son fonctionnement effectif.

5. Système selon l'une ou plusieurs des revendications précédentes, dans lequel les unités de détection comprennent un boîtier ou une boîte de logement dans lequel/laquelle sont logés non seulement le(s) capteur(s) et les circuits de commande des capteurs, pour collecter des signaux de mesure et de traitement des mêmes, mais aussi les sections de réception/transmission et éventuellement la batterie d'alimentation qui peut éventuellement être prévue dans un boîtier séparé pouvant être connecté via câbles au boîtier contenant les capteurs.

6. Système selon l'une ou plusieurs des revendications précédentes, dans lequel des systèmes de production d'énergie électrique, tels que des panneaux photovoltaïques, des générateurs à microturbine ou similaire, sont prévus.

7. Système selon la revendication 5 ou 6,
dans lequel lesdits boîtiers présentent des éléments de fixation intégrés ou couplables avec les mêmes pour les fixer aux structures se trouvant en correspondance des points d'installation, tels que par exemple des fixations intégrées ou pouvant être fixées de manière amovible et destinées à être encastrées dans une paroi et donc fixées à travers des chevilles ou des clous ou des pieux auxdites structures.

8. Système selon l'une quelconque des revendications 5 à 7,
dans lequel ledit boîtier pour loger à la fois le(s) capteur(s) et le hardware des unités de détection, tels que décrits ci-dessus, est connecté soit à un élément de fixation, soit à une structure de fixation au moyen d'un élément flexible qui est interposé entre ledit support de fixation et/ou ladite structure de fixation et le boîtier de l'unité de détection, ledit élément flexible étant conçu comme un joint à redressement automatique.

9. Système selon la revendication 8, dans lequel le joint à redressement automatique est fourni en combinaison avec l'un ou plusieurs des capteurs suivants: capteurs d'accélération, d'inclinaison, de pression, de température, de position et de mouvement.

10. Système selon l'une quelconque des revendications 5 à 9,
dans lequel une pluralité d'unités de détection présentant leurs propres capteurs est prévues, au moins des capteurs d'accélération, des capteurs de la position relative entre différentes unités de détection et/ou des capteurs d'inclinaison et/ou d'autres capteurs, les unités de détection étant concaténées successivement au moyen d'un joint à redressement automatique élastique interposé entre chacun des deux boîtiers successifs de deux unités de détection et entre un premier boîtier d'une première unité de détection adjacente à ladite structure de fixation et/ou à l'élément de fixation, entre ladite boîte et ladite structure de fixation ou ledit élément de fixation.

11. Système selon l'une quelconque des revendications 5 à 10,
dans lequel le boîtier est réalisé sous forme tubulaire et allongée en direction de son axe central, tandis que les joints élastiques sont orientés en position neutre dans l'axe des boîtiers tubulaires et peuvent effectuer des mouvements au moins d'inclinaison et/ou d'allongement et/ou de rotation autour de leur propre axe parallèle à la direction d'allongement, tandis qu'en combinaison avec ledit j oint, l'unité de détection ou les unité(s) de détection concaténée(s) entre elles sont prévues avec au moins un capteur pour mesurer le mouvement de l'unité de détection ou des unités de détections par rapport à la structure de fixation et/ou les uns par rapport aux autres, de préférence selon un ou plusieurs degrés de liberté, de préférence selon tous les degrés de liberté prévus.

12. Système selon l'une quelconque des revendications 8 à 11,
dans lequel lesdits joints peuvent être de type cylindrique ou conique et peuvent se rétrécir progressivement par rapport au joint entre les boîtiers des unités de détection sous-jacentes.

13. Système selon l'une ou plusieurs des revendications précédentes, dans lequel une ou plusieurs unités de détection sont montées dans un cadre en forme de tréteau, ou tétrapode, ou à tréteau multiple, dont le centre de gravité est abaissé vers la base de support déterminée par les extrémités divergentes de la structure en forme de tréteau, ou tétrapode, ou à tréteau multiple, et dans laquelle une ou plusieurs des unités de détection sont supportées, c.à.d. dans l'espace définit par les surfaces d'enveloppement idéales définies par les montants et les traverses du cadre ou du tétrapode.
